# EUROPEAN PATENT APPLICATION

(11) **EP 4 685 949 A1**
(43) Date of publication of application: **28.01.2026**
(21) Application number: 25169096.2
(22) Date of filing: 08.04.2025
(51) Int. Cl.: H01M 50/209, H01M 50/249, H01M 50/367, H01M 50/342, H01M 10/613, H01M 10/6567, H01M 50/30

(54) **INTEGRATED BATTERY PACK AND ELECTRIC VEHICLE**

(30) Priority: 22.07.2024 CN 202421738942 U; 28.10.2024 WO PCT/CN2024/127592
(71) Applicant: Eve Energy Co., Ltd., Huizhou, Guangdong 516006 (CN)
(72) Inventor: Zhou, Hongquan, Huizhou, Guangdong, 516006 (CN); Wang, Zhengrong, Huizhou, Guangdong, 516006 (CN); Zhong, Yu, Huizhou, Guangdong, 516006 (CN)
(74) Representative: Grünecker Patent- und Rechtsanwälte PartG mbB

(57) **Abstract**

Provided are an integrated battery pack and an electric vehicle. The integrated battery pack includes a housing (1), a battery module (2), and multiple support members (3), where an accommodating cavity is provided in the housing (1), the battery module (2) is mounted in the accommodating cavity, a pressure relief valve (26) is disposed on the top of the battery module (2), the multiple support members (3) are spaced apart on the top of the battery module (2) and are sandwiched between the battery module (2) and the housing (1), at least part of the multiple support members (3) cover the pressure relief valve (26), and the at least part of the multiple support members (3) on the pressure relief valve (26) and the battery module (2) enclose a pressure relief channel (323).

## Description

### TECHNICAL FIELD

The present application relates to the field of battery manufacturing technologies, for example, an integrated battery pack and an electric vehicle.

### BACKGROUND

With the rapid development and technology iteration of new energy vehicles, the industry has raised higher requirements on the light weight, safety, and manufacturing costs of the entire vehicle. Therefore, the cell-to-chassis (CTC)/cell-to-vehicle (CTV) technologies have emerged. With an integrated design of the entire vehicle, the market demands for reducing the number of types of components and lowering the manufacturing costs of the entire vehicle are met.

In the related art, a vehicle chassis is integrated with the housing of a battery pack in a CTV electric vehicle, thereby significantly simplifying the structure of the entire vehicle. However, the weight of seats and passengers in the passenger compartment directly acts on the battery pack. Therefore, a battery module in the battery pack is deformed or damaged due to the pressure from the passenger compartment, affecting the safe operation of the battery pack. In addition, when a thermal runaway occurs in the battery module, the high-temperature substances released by a pressure relief valve spread to the bottom of the passenger compartment, directly causing a thermal influence on the passenger compartment.

### SUMMARY

The present application provides an integrated battery pack. The integrated battery pack includes a housing, a battery module, and multiple support members, an accommodation cavity is provided inside the housing, the battery module is mounted in the accommodation cavity, a pressure relief valve is disposed on the top of the battery module, the multiple support members are spaced apart on the top of the battery module and are sandwiched between the battery module and the housing, at least part of the multiple support members cover the pressure relief valve, and a pressure relief channel is enclosed between the at least part of the multiple support members on the pressure relief valve and the battery module.

The present application further provides an electric vehicle. The electric vehicle includes a vehicle body, a seat, and an integrated battery pack, the integrated battery pack is mounted on the vehicle body, and the seat is mounted on the housing of the integrated battery pack.

The present application has the beneficial effects described below.

The multiple support members are disposed between the battery module and the top of the housing. The support members are used for supporting the housing so that the gravity of seats and passengers can be evenly transmitted to the entire battery module by the support members. Thus, the gravity of the seats and the passengers is prevented from being concentrated at a joint between the seats and the housing or in a footrest region of the passenger. By disposing the support members, the improvement of the structural strength and rigidity of the entire integrated battery pack is facilitated, and deformation and distortion of the entire vehicle can be prevented. In addition, the support members cover the pressure relief valve of the battery module, when a thermal runaway occurs in the battery module, high-temperature substances are isolated by the support members, thereby helping reduce a thermal influence on the top of the housing and preventing a terminal influence of the high-temperature substances on a passenger compartment.

### BRIEF DESCRIPTION OF THE DRAWINGS

FIG. 1 is an exploded view of an integrated battery pack according to some implementations of the present application;
FIG. 2 is a cross-sectional view of an integrated battery pack mounted with seats according to some implementations of the present application;
FIG. 3 is a partial cross-sectional view of an integrated battery pack mounted with seats according to some implementations of the present application;
FIG. 4 is an enlarged view of part A in FIG. 3;
FIG. 5 is a schematic view of a housing cover mounted with seats according to some implementations of the present application;
FIG. 6 is a schematic view of a battery module according to some implementations of the present application;
FIG. 7 is an enlarged view of part B in FIG. 6;
FIG. 8 is an exploded view of a battery module according to some implementations of the present application;
FIG. 9 is a cross-sectional view of a first support member according to some implementations of the present application;
FIG. 10 is a cross-sectional view of a second support member according to some implementations of the present application;
FIG. 11 is a partial schematic view of a third support member according to some implementations of the present application; and
FIG. 12 is a schematic view of temperature sensors according to some implementations of the present application.

### Reference list

- 1: housing
- 11: housing bottom
- 111: slot
- 112: first flange structure
- 12: housing cover
- 121: cover body
- 122: second flange structure
- 123: mounting bracket
- 2: battery module
- 21: cell
- 22: cells contact system (CCS) assembly
- 23: insulating plate
- 24: end plate
- 25: buffer sheet
- 26: pressure relief valve
- 3: support member
- 31: first support member
- 311: main support block
- 312: auxiliary support block
- 313: first accommodation groove
- 314: first adhesive groove
- 32: second support member
- 321: first support block
- 322: second support block
- 323: pressure relief channel
- 324: second accommodation groove
- 325: second adhesive groove
- 33: third support member
- 331: third support block
- 332: fourth support block
- 333: third accommodation groove
- 4: side foam adhesive layer
- 5: bottom foam adhesive layer
- 6: liquid cooling plate
- 7: seat
- 8: battery management system (BMS) assembly
- 9: structural adhesive
- 10: temperature sensor

### DETAILED DESCRIPTION

The technical solutions of the present application are described below in conjunction with the drawings and embodiments.

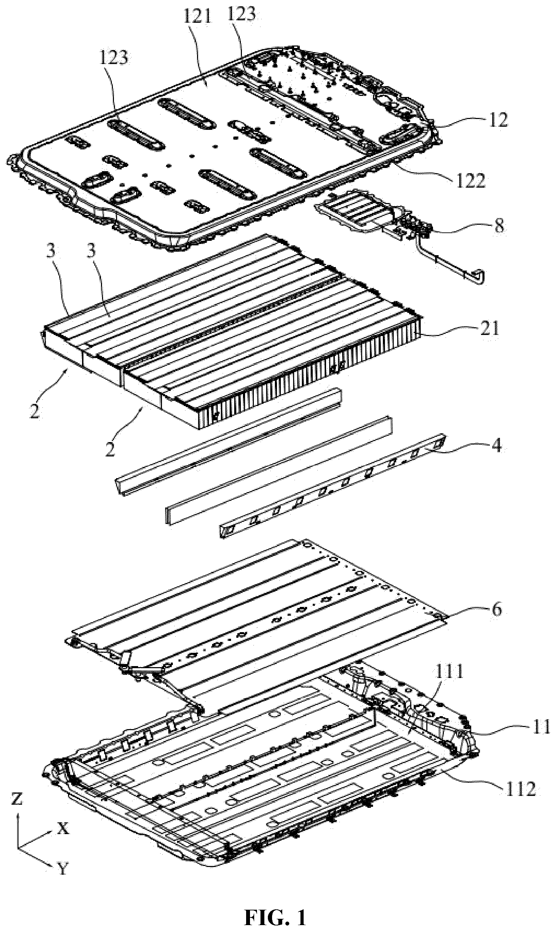

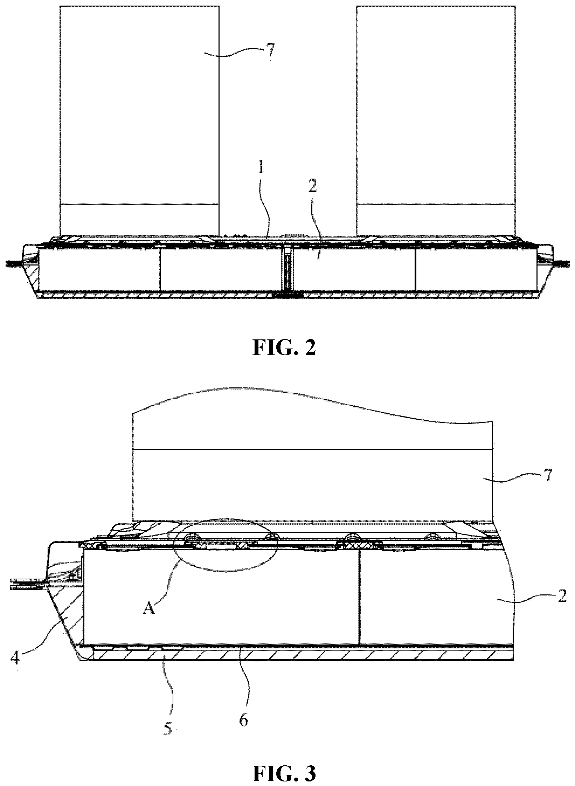

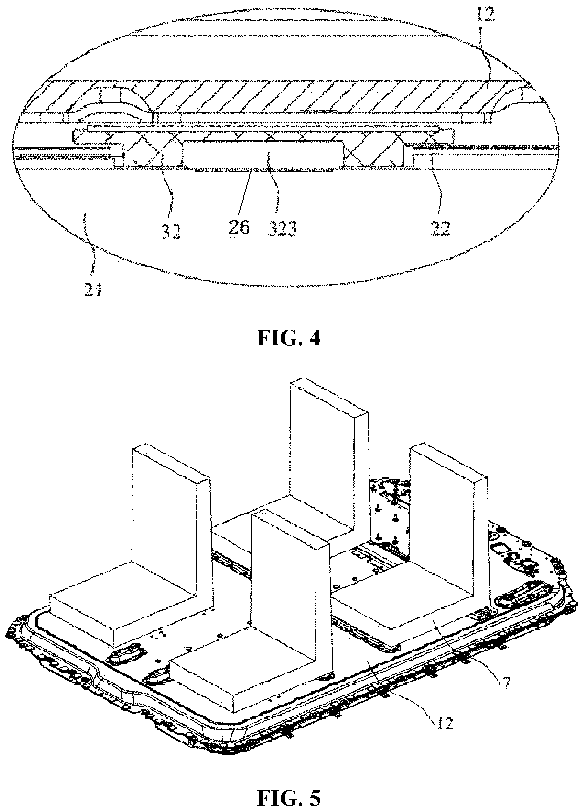

As shown in FIGS. 1 to 5, an integrated battery pack provided by the present application includes a housing 1, a battery module 2, and support members 3. The housing 1 has a cuboid structure, the length direction of the housing 1 is the X direction, the width direction of the housing 1 is the Y direction, and the height direction of the housing 1 is the Z direction, as shown in the figure. The housing 1 has a hollow structure. An accommodation cavity is provided in the housing 1. The battery module 2 is mounted in the accommodation cavity, and a pressure relief valve 26 is disposed on the top of the battery module 2. When a thermal runaway occurs in the battery module 2, the pressure relief valve 26 opens and releases high-temperature gases and other substances (such as electrolytes) in the battery module 2. Multiple support members 3 are provided, spaced apart on the top of the battery module 2, and sandwiched between the battery module 2 and the housing 1. It is also to be understood that a first surface of the support member 3 abuts against the battery module 2 and a second surface of the support member 3 abuts against the top cavity wall of the accommodation cavity. At least part of the support members 3 cover the pressure relief valve 26. That is, the at least part of the support members 3 are disposed at the corresponding position of the pressure relief valve 26 on the battery module 2. A pressure relief channel 323 is enclosed between the support member 3 on the pressure relief valve 26 and the battery module 2. When the thermal runaway occurs in the battery module 2, the high-temperature gases and other substances are discharged into the pressure relief channel 323 through the pressure relief valve 26. The pressure relief channel 323 is used for dispersing and discharging the high-temperature gases and the substances to the outside of the housing 1.

It is to be understood that the integrated battery pack is applied to a CTV electric vehicle. That is, the entire vehicle adopts an integrated design, and the top of the housing 1 is used as the bottom of the passenger compartment of the entire vehicle. The weight of seats 7 and passengers in the passenger compartment directly acts on the housing 1. The multiple support members 3 are disposed between the battery module 2 and the top of the housing 1. Therefore, the support members 3 are used for supporting the housing 1 so that the gravity of the seats 7 and the passengers can be evenly transmitted to the entire battery module 2 by the support members 3. Thus, the gravity of the seats 7 and the passengers is prevented from being concentrated at the joint between the seats 7 and the housing 1 or in the footrest region of the passenger. The support members 3 are provided, thereby helping improve the structural strength and rigidity of the entire integrated battery pack and preventing deformation and distortion of the entire vehicle. In addition, the support members 3 cover the pressure relief valve 26 of the battery module 2. When the thermal runaway occurs in the battery module 2, high-temperature substances are isolated by the support members 3, thereby helping reduce a thermal influence on the top of the housing 1 and preventing a terminal influence of the high-temperature substances on the passenger compartment.

The housing 1 includes a housing bottom 11 and a housing cover 12. The housing bottom 11 and the housing cover 12 are integrally stamped and formed to improve the overall structural strength of the housing 1. A slot 111 is formed on a side of the housing bottom 11 facing the housing cover 12. A first flange structure 112 is formed at the periphery of the housing bottom 11 and surrounds the slot 111. The first flange structure 112 is flush with the opening of the slot 111. The housing cover 12 includes a cover body 121 and a mounting bracket 123. The structure of the cover body 121 is similar to the structure of the housing bottom 11. A second flange structure 122 is formed at the periphery of the cover body 121 and mates with the first flange structure 112. The cover body 121 and the housing bottom 11 are interlocked together and connected and fixed to each other through fasteners such as screws, bolts, and rivets. The fasteners are inserted through the first flange structure 112 and the second flange structure 122. The accommodation cavity is formed between the cover body 121 and the housing bottom 11 and is configured to mount the battery module 2. The mounting bracket 123 is configured to mount a seat 7. Multiple mounting brackets 123 are provided and may include at least two mounting brackets 123 having different shapes and dimensions to adapt to the structures, dimensions, and mounting positions of the seats 7. The multiple mounting brackets 123 are disposed on a side surface of the cover body 121 away from the housing bottom 11. That is, the mounting brackets 123 are disposed on the top of the housing 1. In this embodiment, the mounting brackets 123 and the cover body 121 are integrally stamped and formed. It is to be understood that the housing cover 12 of the housing 1 forms the bottom of the passenger compartment and the gravity from both the seats 7 and the passengers is applied to the housing cover 12. A second surface of the support member 3 is connected to the inner sidewall of the housing cover 12 so that the gravity from the seats 7 and the passengers is evenly distributed to the entire integrated battery pack through the support members 3. Thus, the integrated battery pack is prevented from deformation, distortion, and the like caused by a local concentrated force.

The integrated battery pack further includes a liquid cooling plate 6. A liquid cooling plate in the related art may be used as the liquid cooling plate 6. The liquid cooling plate 6 can dissipate heat from the battery module 2 by using coolants circulating inside. The liquid cooling plate 6 is disposed at the bottom of the accommodation cavity. That is, the liquid cooling plate 6 is mounted at the bottom of the slot 111 on the housing bottom 11. The battery module 2 is mounted on the liquid cooling plate 6, and heat exchange can be performed between the battery module 2 and the liquid cooling plate 6. A foam adhesive is filled between the sidewall of the battery module 2 and the cavity wall of the accommodation cavity to form a side foam adhesive layer 4. Additionally, a foam adhesive is filled between the liquid cooling plate 6 and the cavity bottom of the accommodation cavity to form a bottom foam adhesive layer 5. The side foam adhesive layer 4 and the bottom foam adhesive layer 5 play the role of buffer and energy absorbing. Thus, the battery module 2 and the liquid cooling plate 6 are prevented from being damaged by impacts to the bottom of the electric vehicle during driving. In addition, the foam adhesive is filled so that the gap between the battery module 2 and the housing 1 and the gap between the liquid cooling plate 6 and the housing 1 can be eliminated. Thus, the entire integrated battery pack is integrally formed, thereby improving the strength and rigidity of the entire integrated battery pack. In some embodiments, a foam adhesive may be filled between the battery module 2 and the housing 1 or between the liquid cooling plate 6 and the housing 1 independently.

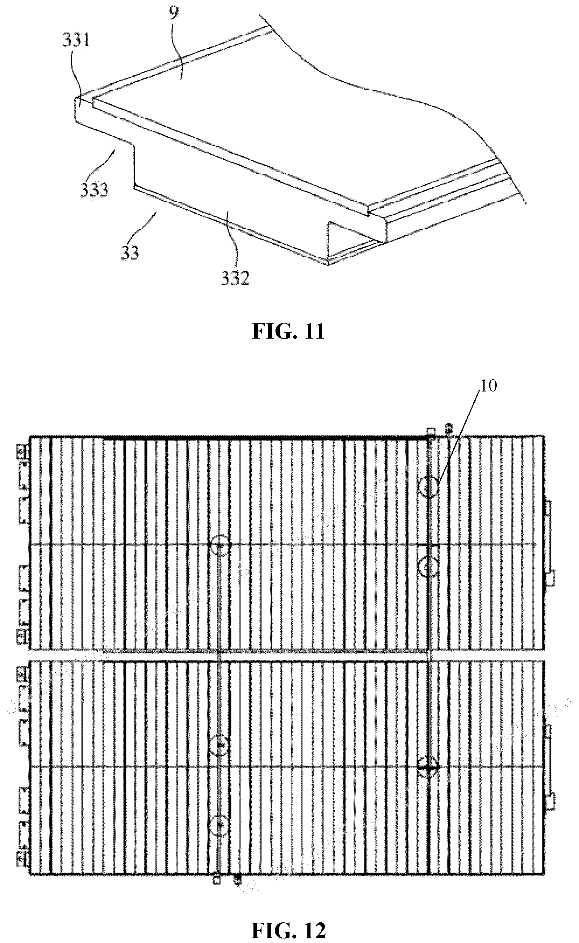

In some embodiments, as shown in FIG. 12, multiple temperature sensors 10 are spaced apart between the battery module 2 and the liquid cooling plate 6, and the temperature sensors 10 are configured to detect the temperature of the battery module 2. The temperature sensors 10 are configured to monitor temperature variations of the battery module 2 so that it is convenient to perform timely intervention in a case of an abnormal temperature in the battery module 2. Thus, the safety of the integrated battery pack is ensured.

In some embodiments, the integrated battery pack further includes a BMS assembly 8. The BMS assembly 8 is disposed on the battery module 2 and electrically connected to the battery module 2. The temperature sensors 10 are electrically connected to the BMS assembly 8. The assembly in the related art may be used as the BMS assembly 8. The BMS assembly 8 is configured to provide protection for the battery module 2, such as undervoltage protection, temperature abnormality protection, and charging and discharging overcurrent protection.

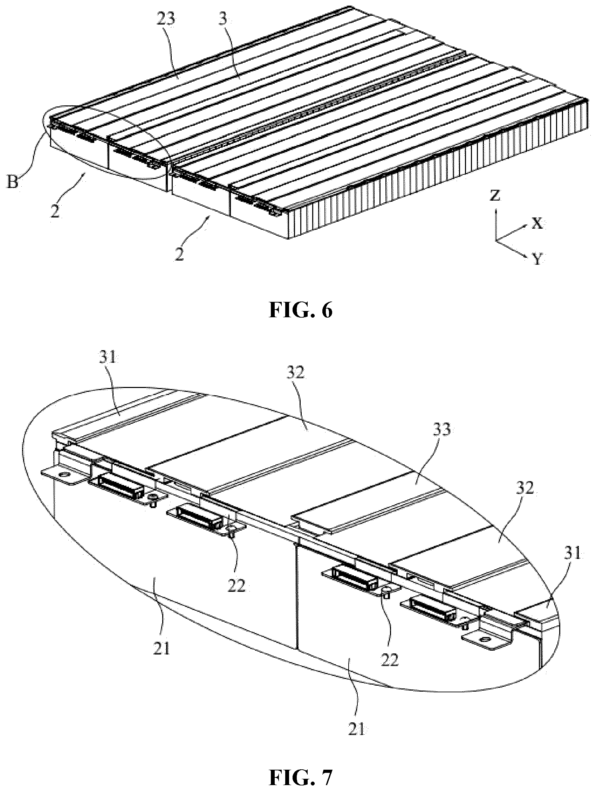

As shown in FIGS. 6 to 8, the battery module 2 includes multiple battery groups sequentially arranged along a first direction (the Y direction shown in the figure). Each battery group includes multiple cells 21 sequentially arranged along a second direction (the X direction shown in the figure). The first direction is perpendicular to the second direction. In this embodiment, the multiple battery groups are sequentially arranged along the width direction of the housing 1, and the cells 21 in each battery group are sequentially arranged along the length direction of the housing 1. Each cell 21 is a square cell. The thickness direction of the square cell is the X direction shown in the figure. The multiple support members 3 are distributed in parallel and spaced apart. The length direction of the support members 3 is parallel to the length direction of the housing 1. Thus, one of the support members 3 can evenly distribute the gravity from the seats 7 and the passengers to the multiple cells 21. A structural adhesive 9 is filled between two adjacent cells 21 so that the gap between adjacent cells 21 can be eliminated and all cells 21 are formed a whole structure to improve the structural strength of the entire battery module 2. In addition, the entire battery module 2 is used for bearing the pressure from the housing cover 12.

Multiple battery modules 2 are mounted in the housing 1 and sequentially arranged along the width direction of the housing 1. In this embodiment, two battery modules 2 are provided. The two battery modules 2 are spaced apart along the width direction of the housing 1, and the structural adhesive 9 is filled between the two battery modules 2. The battery module 2 further includes a CCS assembly 22, an insulating plate 23, an end plate 24, and a buffer sheet 25. The CCS assembly 22 is connected to terminals of the cells 21 and configured to collect data about the voltage and temperature of each cell 21. The CCS assembly 22 is disposed at the top of the battery module 2, and the insulating plate 23 covers the CCS assembly 22 to insulate and protect the CCS assembly 22. Each battery group is correspondingly provided with two end plates 24. The two end plates 24 are spaced apart along the length direction of the housing 1. The multiple cells 21 in the battery group are sandwiched between the two end plates 24. The buffer sheet 25 is made of foam and is sandwiched between each end plate 24 and the inner wall of the housing 1. The buffer sheet 25 plays the role of buffer and energy absorbing. The CCS assembly 22 includes multiple terminal blocks. Multiple rows of positive and negative terminals are distributed on the top of the entire battery module 2. Each row of positive or negative terminals corresponds to and is connected to one terminal block. The multiple terminal blocks are spaced apart along the width direction of the housing 1, and a gap exists between two adjacent terminal blocks.

Since different structures exist in various positions/regions of the top of the battery module 2, the multiple support members 3 are correspondingly configured to have different structures to adapt to mounting spaces. An accommodation groove configured to accommodate the CCS assembly 22 is provided on a side surface of the support member 3 facing the battery module 2. The CCS assembly 22 is located in the accommodation groove of the support member 3 to prevent the top of the housing 1 from directly pressing the CCS assembly 22. Thus, reliable connection between the CCS assembly 22 and the terminals is ensured. In this embodiment, the support members 3 include a first support member 31, a second support member 32, and a third support member 33. The first support member 31 is disposed at each of the two ends of the battery module 2 along the first direction (the width direction of the housing 1). The second support member 32 is disposed above the pressure relief valve 26. The third support member 33 is disposed at a joint between two adjacent battery groups. To ensure the mounting firmness of the support members 3, the second surface and first surface of the support member 3 are bonded and fixed to the housing 1 and the battery module 2, respectively. That is, along the height direction of the housing 1, the first surface of the support member 3 is bonded and fixed to the battery module 2 through the structural adhesive 9, and the second surface of the support member 3 is bonded and fixed to the inner wall of the housing cover 12 through the structural adhesive 9.

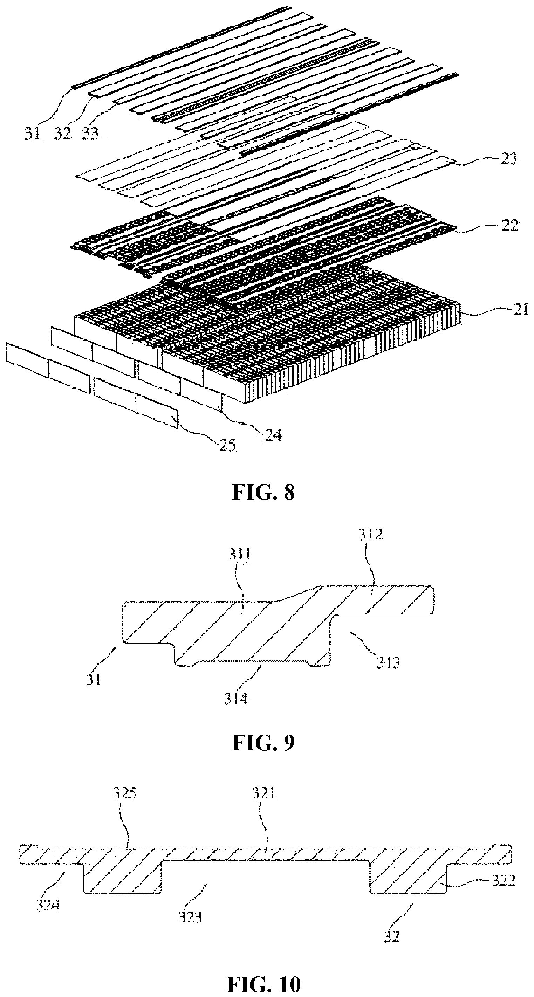

Referring to FIG. 9, the first support member 31 includes a main support block 311 and an auxiliary support block 312. The corresponding accommodation groove on the first support member 31 is a first accommodation groove 313. A first adhesive groove 314 is provided on a side of the main support block 311 facing the battery module 2. The auxiliary support block 312 is disposed on a side of the main support block 311 away from the battery module 2. A first end of the auxiliary support block 312 is connected to the main support block 311. A second end of the auxiliary support block 312 is a free end. The free end of the auxiliary support block 312 extends away from the main support block 311 along the first direction. It is also to be understood that the auxiliary support block 312 is arranged perpendicular to the main support block 311 and the first accommodation groove 313 is enclosed between the main support block 311 and the auxiliary support block 312. The first accommodation groove 313 is configured to accommodate the CCS assembly 22 and the insulating plate 23. In the mounting process, the side of the main support block 311 with the first adhesive groove 314 abuts against the housing of the cells 21 and is bonded and fixed through the structural adhesive 9. A second surface of the main support block 311 and/or a second surface of the auxiliary support block 312 abuts against the inner wall of the housing cover 12 and is bonded and fixed through the structural adhesive 9. The first accommodation groove 313 is configured to avoid the CCS assembly 22 and the insulating plate 23 that are close to the first support member 31. In this embodiment, since the CCS assembly 22 is located under the auxiliary support block 312, pressure from the housing cover 12 can be prevented from directly acting on the CCS assembly 22 and the terminals. Further, a circuit connection region of the battery module 2 is prevented from being broken or deformed by an external force. In some embodiments, the main support block 311 may be set to be higher than the auxiliary support block 312, or the main support block 311 may be set to be lower than the auxiliary support block 312. This structure causes the main support block 311 and the auxiliary support block 312 to be not in the same plane so that a gap is formed between either the main support block 311 or the auxiliary support block 312 and the housing cover 12 to accommodate a sufficient amount of the structural adhesive 9. Thus, the bonding strength between the first support member 31 and the housing cover 12 is improved.

Referring to FIG. 10, the second support member 32 includes a first support block 321 and two second support blocks 322. The corresponding accommodation groove on the second support member 32 is a second accommodation groove 324. A second adhesive groove 325 is provided on a side surface of the first support block 321 facing the inner wall of the housing cover 12. The second adhesive groove 325 is configured to accommodate the structural adhesive 9 so that the second support member 32 and the housing cover 12 are firmly bonded to each other. Along the width direction of the second support blocks 322 (that is, the width direction of the housing 1), the two second support blocks 322 are spaced apart on a side surface of the first support block 321 facing the battery module 2. Moreover, the second support blocks 322 are spaced apart from the end portions of the first support block 321 respectively along the width direction. The first support block 321 and the two second support blocks 322 enclose the pressure relief channel 323. The second accommodation groove 324 is enclosed between each of two ends of the first support block 321 along the first direction and a respective one of the two second support blocks 322. The second accommodation groove 324 is configured to accommodate the CCS assembly 22 and the insulating plate 23. In the mounting process, the side of the first support block 321 with the second adhesive groove 325 abuts against the inner wall of the housing cover 12 and is bonded and fixed through the structural adhesive 9. The second support blocks 322 abut against the housing of the cells 21, and the pressure relief valve 26 is disposed between the two second support blocks 322 so that the first support block 321, the two second support blocks 322, and the cells 21 enclose the pressure relief channel 323. The second accommodation groove 324 is configured to avoid the CCS assembly 22 and the insulating plate 23 that are near the second support member 32. In this embodiment, since the CCS assembly 22 is located under the first support block 321, the pressure from the housing cover 12 can be prevented from directly acting on the CCS assembly 22 and the terminals. Further, the circuit connection region of the battery module 2 is prevented from being broken or deformed by the external force.

Referring to FIG. 11, the third support member 33 includes a third support block 331 and a fourth support block 332. The corresponding accommodation groove on the third support member 33 is a third accommodation groove 333. The third support block 331 is connected to the housing cover 12 of the housing 1. A third adhesive groove is provided on a side surface of the third support block 331 facing the housing cover 12. The third adhesive groove is configured to accommodate the structural adhesive 9 so that the third support block 331 and the housing cover 12 are firmly bonded to each other. The fourth support block 332 is disposed on a side surface of the third support block 331 facing the battery module 2. The fourth support block 332 is connected to the battery module 2. To ensure the bonding firmness of the fourth support block 332, a third adhesive groove may also be provided on a side of the fourth support block 332 away from the third support block 331 to accommodate a sufficient amount of the structural adhesive 9. Along the width direction of the third support block 331 (that is, the width direction of the housing 1), the fourth support block 332 is located at the central portion of the third support block 331. Additionally, the fourth support block 332 is spaced apart from the end portions of the third support block 331 along the width direction. Each of the two ends of the third support block 331 along the width direction thereof (the first direction) and the fourth support block 332 enclose the third accommodation groove 333. The third accommodation groove 333 is configured to avoid the CCS assembly 22 and the insulating plate 23 that are near the third support member 33. In this embodiment, the third support member 33 is mounted at the joint between two adjacent battery groups. In the mounting process, the side of the third support block 331 with the third adhesive groove is bonded and fixed to the inner wall of the housing cover 12, and the fourth support block 332 abuts against the housing of the cells 21 in the two adjacent battery groups and is bonded and fixed to the housing. Since the CCS assembly 22 is located under the third support block 331, the pressure from the housing cover 12 can be prevented from directly acting on the CCS assembly 22 and the terminals. Further, the circuit connection region of the battery module 2 is prevented from being broken or deformed by the external force.

In practical applications, the number and positions of support members 3 may be reasonably configured according to the specific structures and dimensions of the cells 21.

As shown in FIGS. 1, 2, and 5, an electric vehicle is further provided. The electric vehicle includes a vehicle body, seats 7, and an integrated battery pack. The integrated battery pack is mounted on the vehicle body. The top (that is, the housing cover 12) of the housing 1 of the integrated battery pack is also used as the bottom of the passenger compartment of the vehicle body, thereby simplifying the structure of the entire vehicle. The seats 7 are mounted on mounting brackets 123 on the housing cover 12. The weight of the seats 7 and passengers directly acts on the housing cover 12. The integrated battery pack includes the support members 3. Therefore, the gravity from the housing cover 12 is evenly distributed to the entire integrated battery pack through the support members 3. Thus, the integrated battery pack is prevented from deformation, distortion, and the like caused by a concentrated force, thereby improving the safety performance of the integrated battery pack.

In this embodiment, the multiple support members 3 are disposed between the battery module 2 and the top of the housing 1. The support members 3 are used for supporting the housing 1 so that the gravity of the seats 7 and the passengers can be evenly transmitted to the entire battery module 2 by the support members 3. Thus, the gravity of the seats 7 and the passengers is prevented from being concentrated at the joint between the seats 7 and the housing 1 or in the footrest region of the passenger. The support members 3 are provided, thereby helping improve the structural strength and rigidity of the entire integrated battery pack and preventing deformation and distortion of the entire vehicle. In addition, the support members 3 cover the pressure relief valve 26 of the battery module 2. When the thermal runaway occurs in the battery module 2, the high-temperature substances are isolated by the support members 3, which facilitates the reduction in the thermal influence on the top of the housing 1 and prevents the terminal influence of the high-temperature substances on the passenger compartment.

## Claims

1. An integrated battery pack, comprising a housing (1), a battery module (2), and a plurality of support members (3), wherein an accommodation cavity is provided inside the housing (1), the battery module (2) is mounted in the accommodation cavity, a pressure relief valve (26) is disposed on a top of the battery module (2), the plurality of support members (3) are spaced apart on the top of the battery module (2) and are sandwiched between the battery module (2) and the housing (1), at least part of the plurality of support members (3) cover the pressure relief valve (26), and a pressure relief channel (323) is enclosed between the at least part of the plurality of support members (3) on the pressure relief valve (26) and the battery module (2).

2. The integrated battery pack according to claim 1, wherein two opposite surfaces of a support member (3) of the plurality of support members (3) are bonded and fixed to the housing (1) and the battery module (2), respectively.

3. The integrated battery pack according to claim 1, wherein the battery module (2) comprises a plurality of battery groups sequentially arranged along a first direction, and each battery group of the plurality of battery groups comprises a plurality of cells (21) sequentially arranged along a second direction, wherein the first direction is perpendicular to the second direction; and
the plurality of support members (3) are arranged in at least one of the following configurations: a support member (3) is disposed at each of two ends of the battery module (2) along the first direction; or a support member (3) is disposed at a joint between two adjacent ones of the plurality of battery groups.

4. The integrated battery pack according to claim 3, wherein the battery module (2) further comprises a cells contact system, CCS, assembly (22), the CCS assembly (22) is connected to terminals of the plurality of cells (21), and the support member (3) is provided with an accommodation groove configured to accommodate the CCS assembly (22).

5. The integrated battery pack according to claim 4, wherein in a case where the support member (3) is disposed at each of the two ends of the battery module (2) along the first direction, the plurality of support members (3) comprise a first support member (31), the first support member (31) is disposed at each of the two ends of the battery module (2) along the first direction, the first support member (31) comprises a main support block (311) and an auxiliary support block (312), the auxiliary support block (312) is provided on a side of the main support block (312) away from the battery module (2), a free end of the auxiliary support block (312) extends away from the main support block (311) along the first direction, and the accommodation groove is enclosed between the main support block (311) and the auxiliary support block (312).

6. The integrated battery pack according to claim 4, wherein the plurality of support members (3) comprise a second support member (32), the second support member (32) covers the pressure relief valve (26), the second support member (32) comprises a first support block (321) and two second support blocks (322), the first support block (321) is connected to the housing (1), the two second support blocks (322) are spaced apart on a side surface of the first support block (321) facing the battery module (2), the two second support blocks (322) are connected to the battery module (2), the pressure relief channel (323) is enclosed between the first support block (321), the two second support blocks (322), and the plurality of cells (21), and the accommodation groove is enclosed between each of two ends of the first support block (321) along the first direction and a respective one of the two second support blocks (322).

7. The integrated battery pack according to claim 4, wherein in a case where the support member (3) is disposed at the joint between the two adjacent ones of the plurality of battery groups, the plurality of support members (3) comprise a third support member (33), the third support member (33) is disposed at the joint between the two adjacent battery groups, the third support member (33) comprises a third support block (331) and a fourth support block (332), the third support block (331) is connected to the housing (1), the fourth support block (332) is provided on a side surface of the third support block (331) facing the battery module (2), the fourth support block (332) is connected to the battery module (2), and the accommodation groove is enclosed between each of two ends of the third support block (331) along the first direction and the fourth support block (332).

8. The integrated battery pack according to claim 3, wherein a structural adhesive (9) is filled between two adjacent cells (21) among the plurality of cells (21).

9. The integrated battery pack according to any one of claims 1 to 8, further comprising a liquid cooling plate (6), wherein the liquid cooling plate (6) is disposed at a bottom of the accommodation cavity, the battery module (2) is mounted on the liquid cooling plate (6), and a foam adhesive is filled in at least one of the following: between the battery module (2) and a cavity wall of the accommodation cavity or between the liquid cooling plate (6) and a cavity bottom of the accommodation cavity.

10. The integrated battery pack according to claim 9, wherein a plurality of temperature sensors (10) are spaced apart between the battery module (2) and the liquid cooling plate (6), and the plurality of temperature sensors (10) are configured to detect a temperature of the battery module (2).

11. The integrated battery pack according to any one of claims 1 to 8, wherein a mounting bracket (123) is disposed on a top of the housing (1) and is configured to mount a seat (7).

12. An electric vehicle, comprising a vehicle body, a seat (7), and the integrated battery pack according to any one of claims 1 to 11, wherein the integrated battery pack is mounted on the vehicle body, and the seat is mounted on the housing (1) of the integrated battery pack.
